# EUROPEAN PATENT SPECIFICATION

(11) **EP 4 544 173 B1**
(45) Date of publication and mention of the grant of the patent: **04.03.2026**
(21) Application number: 23737884.9
(22) Date of filing: 21.06.2023
(51) Int. Cl.: F03D 1/06

(54) **FAMILY OF WIND TURBINE BLADES**
FAMILIE VON WINDTURBINENROTORBLÄTTERN
FAMILLE DE PALES D'ÉOLIENNE

(30) Priority: 22.06.2022 DK PA202270334
(43) Date of publication of application: 30.04.2025
(73) Proprietor: VESTAS WIND SYSTEMS A/S, 8200 Aarhus N (DK)
(72) Inventor: NIELSEN, Thomas S. Bjertrup, 8200 Aarhus N (DK); ØSTERLUND, Mikkel Kiilerich, 8200 Aarhus N (DK); FAJAR, Mohammed, 8200 Aarhus N (DK); LARSEN, Torben Juul, 8200 Aarhus N (DK)
(74) Representative: Vestas Patents Department
(86) International application number: PCT/DK2023/050157
(87) International publication number: WO 2023/246997

(56) References cited:
- US-A1- 2012 051 912
- US-A1- 2014 056 715
- US-A1- 2018 320 655

## Description

### Technical field

The present invention relates generally to wind turbine blades and more particularly to a family of wind turbine blades for cable-stayed wind turbine rotors.

### Background

There is a continuing desire to generate increased levels of power from onshore and offshore wind farms. One way to achieve this is to provide modern wind turbines with larger wind turbine blades. The provision of larger blades increases the swept area of the rotor, allowing the wind turbine to capture more energy from the wind. However, increasing the length of a wind turbine blade increases the magnitude of loads that the blade, hub, and blade bearing must withstand in use. For example, flapwise loads resulting from wind pressure on the blade, and edgewise loads resulting from the weight of the blade, are both greater for larger blades.

Wind turbine blades comprise a blade root configured for connecting the blade to the hub of the wind turbine. To help withstand the increased loading in use, longer blades typically have a reinforced blade root with increased dimensions, for example, a greater root diameter. However, manufacturing blades with larger reinforced blade roots increases costs, and can make manufacture and transportation of such blades more difficult.

In addition to these challenges, because the blade loads vary with varying blade length, designing and manufacturing wind turbine blades of different lengths for different wind farms, or for different wind turbine sites within a wind farm, typically involves designing and manufacturing a completely new blade. The substantial cost and engineering complexity involved in designing and manufacturing new blades limits the commercial viability of such site-specific blades. In many cases, an average or "best fit" blade may be used throughout a wind farm or across different wind farms with similar wind characteristics. This means that many turbines in a wind farm may not be able to extract the maximum available energy from the wind, due to the use of sub-optimal blades. As such, there is an opportunity to extract energy from the wind more effectively if the cost and engineering challenges of manufacturing site-specific blades are overcome.

US 2014/056715 A1 discloses a group of wind turbine blades.

It is against this background that the present invention has been developed.

### Summary

In a first aspect of the present invention there is provided a family of wind turbine blades for cable-stayed wind turbine rotors. The family comprises a plurality of blades of different lengths, such as for example two, three, four, five, six or more blades of different lengths. Each blade extends in a spanwise direction between a blade root for connection to a hub of a cable-stayed rotor, and a blade tip. Each blade has a blade length defined by a spanwise distance between the blade root and the blade tip. Each blade further comprises an inboard portion defining the blade root, an outboard portion defining the blade tip, and an intermediate portion between the inboard portion and the outboard portion. The intermediate portion comprises a cable connection point located at a spanwise distance r from the blade root. The inboard portion of each blade is the same as the inboard portions of the other blades in the family. The outboard portion of each blade is the same as the outboard portions of the other blades in the family. The intermediate portion of each blade has a different spanwise length compared to the intermediate portions of the other blades in the family. The cable connection point of each blade in the family is located at a different spanwise distance r from the blade root than the connection point of each of the other blades in the family. The spanwise distance r increases as blade length increases.

The cable connection point is configured to connect a cable of the cable-stayed rotor to the wind turbine blade. The cable connection point is preferably configured for connecting a cable between the blade and another blade of the cable-stayed rotor. The cable may be connected directly to a cable connection point of another wind turbine blade, or may be connected indirectly, for example via another cable. The cable is configured to transfer some of the loads experienced by the blade in use to another wind turbine blade and/or to the hub of the wind turbine. In particular, the cables reduce the loads experienced by the inboard portion of the blade, and thereby also reduce the amount of blade loads transferred from the blade to the hub via the blade root. Furthermore, this reduces the weight of the inboard portion of the blade as the mechanical requirements of the inboard portion of the blade is reduced when compared to a blade of same length of a none-cable-stayed rotor. This is because some of the blade loads are transferred to the cable at the cable connection point, and these loads are then transferred to another blade and/or to the hub via a separate route, bypassing the blade root.

As such, the use of cables, i.e. blade connecting cables, at least reduces the extent to which the blade root dimensions may be increased for longer blades (compared to blades of a wind turbine that doesn't include blade connecting cables), and in preferred examples, the use of blade connecting cables may advantageously facilitate an increase in blade length without increasing the blade root dimensions. As noted above, this is because some of the blade loads are unloaded, i.e. transferred, to the cable at the cable connection point. As such, the swept area of the rotor may be increased, meaning that more energy can be captured from the wind, without necessarily increasing the diameter of the blade root.

In the present context, "cable" should be interpreted broadly to include examples such as flexible connecting members and rigid connecting members. For example, in the present context, a "cable" may be a braided or laid rope of metal wires (such as steel wires, for example), polymer fibres (such as (ultra-high molecular weight) polyethylene, polypropylene, nylon, polyester, aramid fibres, for example), inorganic fibres (such as carbon fibres, for example) or hybrid ropes of such materials. It will be appreciated that the "cable" referred to herein also includes rigid connecting members configured for connection between connecting points of two blades of a wind turbine. As such, the "cable" referred to herein may comprise a composite member such as a pultrusion, or may comprise a metal rod, to name a few possible examples.

The cable connection point is located further outboard, i.e. further away from the blade root in the spanwise direction, for longer blades in the family. By locating the cable connection point further outboard as the blade length increases, the loads in the inboard portion and blade root can be kept constant, or close to constant for each of the blades in the family. For example, whilst the blade loads increase as a result of the increased blade length, locating the cable connection point further outboard means that a greater proportion of the blade loads may be transferred to the cable via the cable connection point. As such, the variation in the blade loads due to the change in blade length is alleviated by the cable and the location of the cable connection point, such that the loads in the inboard portion and blade root can be kept constant, or close to constant. Locating the cable connection point further outboard therefore facilitates the provision of longer wind turbine blades without necessarily requiring a different inboard portion and blade root for structural purposes. Accordingly, the same hub, the same blade bearing, and the same blade-to-hub interface, can be used across a rotor family where the rotors comprise blades of different lengths from the family of wind turbine blades.

Each blade in the family preferably comprises an outer shell defining an aerodynamic profile that varies along the length of the blade. It will be understood that references to the inboard portion of each blade being the same as the inboard portion of the other blades in the family mean that in the inboard portion of each blade in the family, at least the outer dimensions, i.e. the profile, of the outer shell is the same as the outer dimensions, i.e. the profile, of the outer shell in the inboard portion of the other blades in the family. It follows that that references to the outboard portion of each blade being the same as the outboard portion of the other blades in the family mean that in the outboard portion of each blade in the family, at least the outer dimensions, i.e. the profile, of the outer shell is the same as the outer dimensions, i.e. the profile, of the outer shell in the outboard portion of the other blades in the family.

In preferred examples, the "same" portions of different blades in the family may have further similarities, in addition to at least the outer dimensions, i.e. the profiles, of the outer shells being the same across the corresponding portions of blades in the family. By way of brief example only, in some examples, the "same" portions of different blades in the family may each have additional equivalent features, such as structural elements, sensors, heating elements, lightning conductors, for example.

In some examples, different blades in the family may comprise different supplementary features, such as vortex generators, gurney flaps, stall fences, serrated edges or other add-on features attached to the outer shell of the blade. It will be understood that references to particular portions of each blade that are the same as corresponding portions of other blades in the family refer to the blade itself, irrespective of any supplementary features that may be attached to the blade. By way of example, it will be appreciated that a blade in the family may comprise vortex generators arranged on the blade shell in the inboard portion of the blade, and that such an inboard portion may still be referred to as the "same" as an inboard portion of another blade in the family which does not include vortex generators. It will be appreciated that this is only one of many possible examples.

In some examples, the outboard portion of each blade may comprise at least 30% of the length of the blade. In preferred examples, the outboard portion of each blade may comprise at least 35% to 70% of the length of the blade. For example, the outboard portion of each blade may comprise at least 40% of the length of the blade. In other examples, the outboard portion of each blade may comprise at least 45%, or at least 50% of the length of the blade. Configuring each blade in the family with an outboard portion that comprises at least 30% of the length of the blade reduces production costs for the family of blades because a significant proportion of each blade is the same, enabling the use of high volume manufacturing techniques to manufacture the outboard portion of each blade, and/or facilitating the re-use of blade moulds or mould parts for blades of different lengths across the blade family. Since cost of moulds and lead time for new moulds may be significant, this design feature of the blade family greatly reduces cost and flexibility of manufacturing of blades of the blade family. Particularly, this greatly enhances that several members of a blade family rather than one single blade (or several blades with significant redesign and completely independent moulds) are used in a wind turbine park.

In some examples, the blade root of each blade may comprise a bolt circle. Preferably, the bolt circle of each blade has the same diameter. The term "bolt circle" may refer to an arrangement of bolts that extend from the blade root to connect the blade to the hub of a cable-stayed rotor. Alternatively, the term "bolt circle" may refer to an arrangement of holes or bores configured facilitate the arrangement of bolts to connect the blade to the hub of a cable-stayed rotor. Configuring each blade in the family of wind turbine blades with a bolt circle of the same diameter means that each blade can be attached to the same hub, i.e. to a hub of the same design, despite the different blade lengths. Providing the same interface for connecting the blades to the hubs of different rotors reduces cost and engineering complexity because the same rotor hub can be used for rotors of various different diameters.

It will be appreciated that references to "the same hub" or "the same rotor hub" refer to the main construction of the rotor hub, i.e. the structural features of the hub and the interfaces provided for connecting the blades to the hub. Accordingly, it will be appreciated that different examples of "the same rotor hub" may include different supplementary features, such as features for attaching different components such as a blade connecting cable tensioning system and/or aerodynamic devices, for example.

As previously described, each blade preferably comprises an outer shell defining an aerodynamic profile that varies along the length of the blade. Each blade may have a substantially constant aerodynamic profile throughout a spanwise section of the intermediate portion. The length of the spanwise section may increase with increasing blade length in some examples. For example, the family may comprise a plurality of blades of different lengths, wherein the different blade lengths are resultant from the different lengths of the spanwise sections of constant aerodynamic profile of each blade. As will be described in more detail with reference to other examples later, it will be appreciated that varying the length of a spanwise section of constant aerodynamic profile is only one of a plurality of different ways in which the different blade lengths may be achieved for blades in the family.

In some examples, the cable connection point of each blade may be located in the spanwise section of constant aerodynamic profile. The spanwise section of constant aerodynamic profile may be structurally reinforced, or may have greater strength than the surrounding portions of the blade wherein the aerodynamic profile varies. The spanwise section of constant aerodynamic profile may therefore provide a structurally advantageous location for the cable connection point to transfer loads between the blade and the connecting cable.

In some examples, the blades are modular wind turbine blades (also referred to as split blades) comprising an inboard blade module and an outboard blade module. The inboard blade module preferably defines the inboard portion of the blade and at least part of the intermediate portion of the blade. The entire outboard portion of each blade is preferably defined by an outboard blade module. This configuration reduces manufacturing complexity and means that tooling and blade moulds, or mould parts, can be re-used to form parts of different blades of different lengths in the family of blades.

In particular, providing the blades in the family of wind turbine blades as a modular assembly may improve ease of transportation. For example, the blade modules may be transported to a wind turbine site separately before being assembled to form the modular blade. As such, it may be possible to transport modular blades to wind turbine sites that would not be accessible for conventional, i.e. non-modular blades of an equivalent length. Providing the wind turbine blades in the family as modular wind turbine blades may be particularly advantageous for blades exceeding 80 m in length.

Conventional, i.e. non-modular wind turbine blades may be referred to herein as "whole-length blades". It will be appreciated that as used herein, "whole-length blades" refers to blades wherein the main body of the wind turbine blade shell is manufactured, for example moulded, in a blade manufacturing facility prior to transporting the blade to a wind turbine site. A whole-length blade may be formed of two-half shells joined together in some examples. Alternatively a whole-length wind turbine blade may be formed as a single moulded body in other examples. It will be appreciated that the terms "whole-length blades" or "conventional blades" are used herein merely as a distinction between typical wind turbine blades and modular wind turbine blades, i.e. a modular wind turbine blade is not a whole-length or conventional wind turbine blade.

The outboard blade module of each blade may be the same as the outboard blade modules of the other blades in the family of wind turbine blades. As such, in some examples, high volume manufacturing techniques can be used to manufacture a large volume of outboard blade modules as standard parts that are common across the blade family. This may help to facilitate cost-effective manufacture of the wind turbine blades in the family.

Alternatively, in some examples the outboard blade module of each blade may have a different spanwise length compared to the outboard blade modules of the other blades in the family of wind turbine blades. In this case, the outboard blade modules comprise both the outboard portion of the blade and part of the intermediate portion of the blade. The variation in blade lengths for blades in the family may therefore be at least partly resultant from the different length outboard blade modules. This may help to facilitate a greater variation in the lengths of the blades in the family.

In some examples, the inboard blade module of each blade may have a different spanwise length compared to the inboard blade modules of the other blades in the family of wind turbine blades. The variation in blade length for blades in the family may therefore be at least partly resultant from the different length inboard blade modules. In particular this facilitates the use of the same outboard blade modules across blades of different lengths in the family. As previously noted, this may mean that high volume manufacturing techniques can be used to manufacture a large volume of outboard blade modules as standard parts that are common across the blade family.

In some examples, the inboard blade module of each blade may have a different pre-bend compared to the inboard blade modules of the other blades in the family of wind turbine blades. Pre-bend refers to the angle through which the inboard blade module may be curved or bent, i.e. the angular offset between opposing first and second ends of the inboard blade module. Varying the pre-bend of an inboard blade module changes the angle at which the blade extends from the hub when the cable-stayed rotor is assembled, and as such, varying the pre-bend changes the coning angle of the cable-stayed rotor. Advantageously this may therefore facilitate the provision of site-specific cable-stayed rotors with different coning angles, where each of the rotors has blades from the family of wind turbine blades.

In some examples where the blades are modular wind turbine blades, each blade preferably comprises a joint connecting the outboard blade module to another blade module. The cable connection point of each blade may be located at the joint. The joint may be reinforced to transfer loads safely and effectively between the blade modules. The joint may therefore provide a structurally advantageous location for transferring loads from the blade into the cable via the cable connection point. Additionally, in some examples the joint may disrupt the airflow over the blade, and the cable connection point may also disrupt the airflow over the blade. It may therefore be advantageous to provide the cable connection point and joint at the same location to minimise the total disruption to the airflow over the blade in use. When the cable connection point is arranged at the joint between blade modules, both modules are considered to comprise the cable connection point.

In some examples, the inboard blade module of each blade may comprise the cable connection point. An inboard blade module typically covers a smaller swept area than an outboard blade module in use, due to its relative proximity to the rotor axis. As such, the configuration of the inboard blade module may have less of an influence on the overall aerodynamic performance of the blade, compared to the outboard blade module. The inboard blade module may therefore be configured more specifically for structural performance rather than aerodynamic performance, whereas outboard blade modules may be configured primarily for aerodynamic performance. Providing the cable connection point on the inboard module may therefore be advantageous for transferring loads between the blade and the cable, and may also reduce noise and reduce the effect of drag resultant from the cable connection point.

Alternatively, in some examples, the outboard blade module of each blade may comprise the cable connection point. In such an example, both the variation in blade length and the variation in the spanwise position of the cable connection point can be achieved by varying the spanwise length of the inboard blade module.

In some examples, each modular wind turbine blade may further comprise an intermediate blade module connected between the inboard blade module and the outboard blade module. The intermediate blade module of each blade may comprise the cable connection point. The inclusion of an intermediate blade module may facilitate a greater range of blade lengths for blades in the family. Further, the inclusion of an intermediate blade module may facilitate the standardisation of a greater proportion of each blade across the blades in the family, as will be explained later.

In some examples each blade in the family may comprise an intermediate blade module that has a different spanwise length compared to the intermediate blade modules of the other blades in the family of wind turbine blades. The variation in blade length and spanwise position of the cable connection point may therefore be achieved at least partly by providing different intermediate blade modules for different blades in the family.

It follows that in some examples where the blades in the family comprise an intermediate blade module, the inboard blade module of each blade may be the same as the inboard blade module of the other blades in the family of wind turbine blades. Further, in some examples where the blades in the family comprise an intermediate blade module, the outboard blade module of each blade may be the same as the outboard blade module of the other blades in the family of wind turbine blades. The family of wind turbine blades may therefore comprise inboard and/or outboard blade modules that are common across each of the blades in the family. This may reduce cost and part count whilst still achieving different blade lengths, and different spanwise positions of the cable connection point, for each blade by including different intermediate blade modules for each blade in the family.

In some examples, the spanwise distance r may be between 25% and 60% of the total blade length. In preferred examples, the spanwise distance r may be between 40% and 50% of the total blade length. Locating the cable connection point at a spanwise distance r that is between 25% and 60% of the total blade length facilitates an advantageous transfer of loads from the blade to the cable via the cable connection point whilst also enabling significant spanwise portions of each blade to be the same as other blades in the family.

In some examples, the outboard portion of each blade comprises a winglet. Particularly, the tip of the blades may be formed by a winglet. Examples, where the outboard portion of each blade comprising the winglet is defined by an outboard blade module was found to be particularly advantageous outboard blade modules typically are more flexible and have a lower maximum thickness and chord than whole-length blades which makes transportation of outboard blade modules with a winglet much earlier to transport than whole-length blades with winglets.

In another aspect of the present invention there is provided a cable-stayed wind turbine rotor comprising a plurality of wind turbine blades from a family of wind turbine blades as previously described. The cable-stayed rotor further comprises a rotor hub and a plurality of blade connecting cable. Each blade connecting cable is connected between corresponding cable connection points of a pair of wind turbine blades.

In preferred examples, the blades in the family are configured for attachment to the hub of a cable-stayed rotor via a respective pitch mechanism. As such, the blades in the family of wind turbine blades may be referred to as pitchable wind turbine blades, and the family may be referred to as a family of pitchable wind turbine blades. It follows that the cable-stayed wind turbine rotor may be referred to as a cable-stayed pitchable rotor (CSPR).

### Brief description of the drawings

Examples of the present invention will now be described by way of non-limiting example only, with reference to the accompanying figures, in which:
Figure 1 is a schematic perspective view of a wind turbine comprising a cable-stayed rotor fitted with a plurality of wind turbine blades from a family of wind turbine blades;
Figure 2 schematically shows a family of wind turbine blades of different lengths comprising blade portions that are common across each blade in the family;
Figure 3 schematically shows a family of wind turbine blades of different lengths comprising blades that have different length spanwise sections of constant aerodynamic profile;
Figure 4 schematically shows a family of modular wind turbine blades of different lengths wherein each blade comprises an inboard module having a different spanwise length;
Figure 5 schematically shows a family of modular wind turbine blades of different lengths wherein a cable connection point of each blade is located at a joint between the blade modules;
Figure 6 schematically shows a family of modular wind turbine blades of different lengths wherein each blade has an inboard module having a different pre-bend;
Figure 7 schematically shows a family of modular wind turbine blades of different lengths wherein each blade comprises an outboard module having a different spanwise length; and
Figure 8 schematically shows a family of wind turbine blades of different lengths wherein each blade comprises a different length intermediate module between the inboard and outboard modules.

### Detailed description

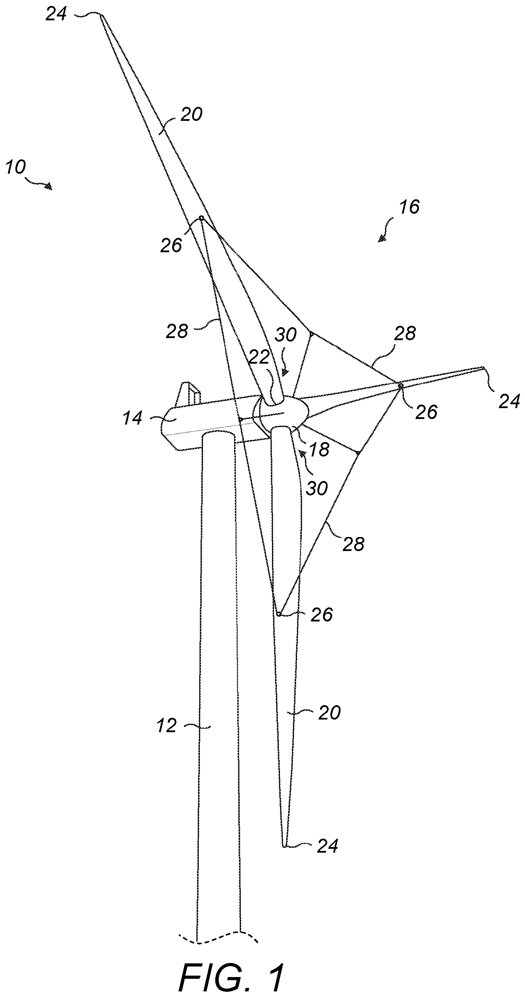

Figure 1 shows a wind turbine 10 comprising a tower 12 and a nacelle 14 mounted on the tower 12. A rotor 16 is mounted to the nacelle 14, and the rotor 16 comprises a hub 18 and a plurality of wind turbine blades 20. In this example, the wind turbine 10 comprises three wind turbine blades 20. The blades 20 may be pitchable wind turbine blades 20, i.e. the pitch of the blades 20 may be adjustable. As such, the wind turbine blades 20 may be connected to the hub 18 via respective pitch mechanisms (not shown), by means of which the blades 20 may be rotated relative to the hub 18. Accordingly, in preferred examples, the pitch of the wind turbine blades 20 can be controlled and adjusted in dependence on the relative velocity of the incident wind to ensure that the blades 20 are oriented with an advantageous angle of attack for capturing energy from the wind.

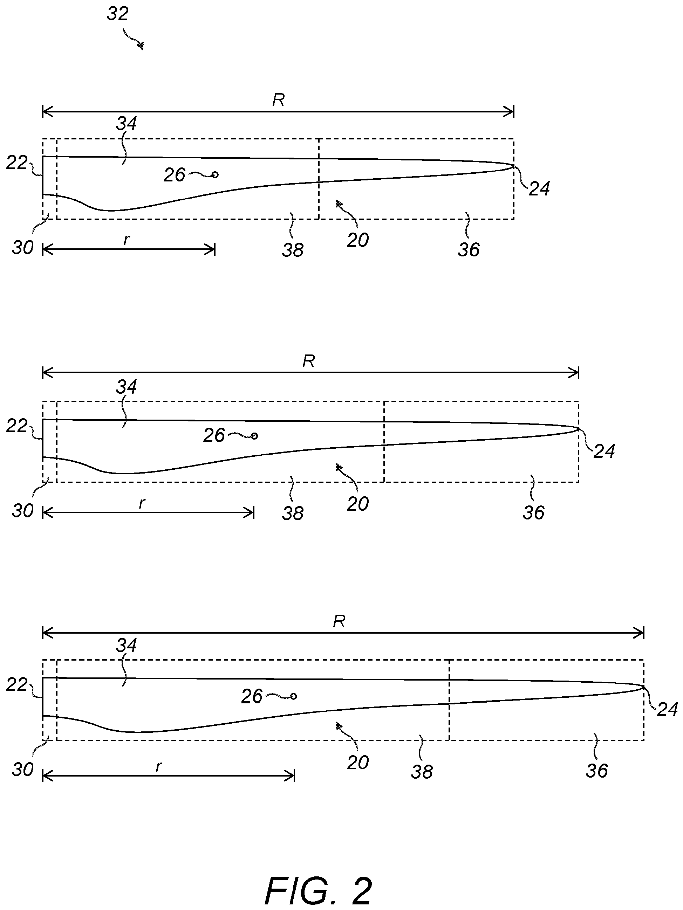

The wind turbine blades 20 will be described in more detail later with reference to the remaining figures, however, by way of a brief description, each wind turbine blade 20 extends in a spanwise direction between a blade root 22 and a blade tip 24. The blade root 22 is preferably configured for connection to the hub 18, either directly (as shown in Figure 1), or via another wind turbine component, such as a blade root extension (not shown). As shown more clearly in Figures 2 to 8, each blade 20 comprises a cable connection point 26 that is configured to facilitate connection of a blade connecting cable 28 to the wind turbine blade 20. It will be appreciated that a cable connection point 26 is a means for connecting a blade connecting cable 28 to the wind turbine blade 20, and the invention is not limited to any specific configuration of a cable connection point 26. As such, the cable connection points 26 shown in the accompanying figures are provided by way of example only.

As shown in Figure 1, the wind turbine 10 may comprise a plurality of blade connecting cables 28, and each of the blade connecting cables 28 is preferably connected between corresponding cable connection points 26 of a pair of wind turbine blades 20. The blade connecting cables 28 are configured to transfer some of the loads experienced by the blade 20 during use to another wind turbine blade 20 and/or to the hub 18. Accordingly, the blade connecting cables 28 may reduce the loads experienced by an inboard portion 30 of the blade 20, and may therefore also reduce the amount of blade loads transferred from the blade 20 to the hub 18 via the blade root 22. This is because some of the blade loads are transferred to the blade connecting cable 28 at the cable connection point 26, and these loads are then transferred to another blade 20 or to the hub 18 via a separate route, bypassing the inboard portion 30 and the blade root 22. A wind turbine rotor 16 comprising cables 28 connected between blades 20 of the rotor 16 may be referred to as a cable-stayed rotor 16.

With additional reference to Figure 2, a cable-stayed rotor 16 may be fitted with blades 20 from a family 32 of wind turbine blades 20. The family of wind turbine blades 32 comprises blades 20 of different lengths R. As such, different blades 20 from the family 32 may be selected for use on different wind turbines 10 in dependence on a number of factors, such as wind characteristics for a particular wind turbine site, to optimise the wind turbine 10 for capturing energy from the wind at a particular site. As will be described in more detail later, each blade 20 in the family of wind turbine blades 32 comprises blade portions that are the same as corresponding portions of the other blades 20 in the family, which helps to facilitate cost effective manufacture of blades 20 in the family 32.

The blades 20 preferably each comprise an outer shell 34 that defines an aerodynamic profile configured to generate lift when wind is incident on the blade 20 in use. The aerodynamic profile of each blade 20 varies along the spanwise length R of the blade 20. For example, the blades 20 may comprise a relatively thick airfoil profile near to the blade root 22 for increased strength, and a relatively thin airfoil profile near to the blade tip 24 to reduce blade mass and generate more lift from the incident wind.

As shown in Figure 2, each blade 20 in the family 32 comprises an inboard portion 30 that defines the blade root 22, and the tip 24 of each blade 20 is defined by an outboard portion 36. Each blade 20 has a blade length R defined by a spanwise distance between the blade root 22 and the blade tip 24. Each blade 20 in the family 32 further comprises an intermediate portion 38 between the inboard portion 30 and the outboard portion 36. The intermediate portion 38 comprises the cable connection point 26, which is located at a spanwise distance r from the blade root 22.

Referring still to Figure 2, the cable connection point 26 of each blade 20 in the family 32 is located at a different spanwise distance *r* from the blade root 22 compared to the other blades 20 in the family 32. Notably, the spanwise distance r increases as blade length R increases, i.e. the cable connection point 26 is located further outboard on longer wind turbine blades 20 in the family 32. In preferred examples, the cable connection point 26 for each blade 20 in the family 32 is located at a spanwise distance r from the blade root 22 that is between 25% and 60% of the total blade length R. Locating the cable connection point 26 further outboard on longer blades 20 in the family 32 helps to ensure that blade loads in the inboard portion 30, and loads transferred to the hub 18 via the blade root 22, are kept substantially consistent across all of the blades 20 in the family 32, despite the variation in blade length R. This means that the blades 20 in the family 32 can be manufactured with blade portions 30, 36, that are common across all of the blades 20 in the family 32, despite the variation in blade length R.

As shown in Figure 2, the inboard portion 30 of each blade 20 is the same as the inboard portions 30 of the other blades 20 in the family 32. As described above, the provision of the same inboard portion 30 on each blade 20 in the family 32 is made possible by the use of blade connecting cables 28 that help to keep the blade loads in the inboard portion 30 of each blade 20 substantially the same, despite the variation in blade length R. This means that the blade root 22, i.e. the interface for connecting the blade 20 to a hub 18, can be the same on each blade 20 in the family 32. For example, the blade root 22 of each blade 20 may comprise a bolt circle, i.e. an arrangement of bolts extending from the blade root 22 or an arrangement of bores for receiving bolts, arranged around the blade root 22. Preferably the bolt circle of each blade 20 has the same diameter. This means that each of the blades 20 in the family 32 can be fitted to rotor hubs 18 of the same style or design, despite the variation in blade lengths R, which reduce design cost and simplifies manufacturing.

The outboard portion 36 of each blade 20 is the same as the outboard portions 36 of the other blades 20 in the family 32. Providing each of the blades 20 in the family 32 with the same outboard portion 36 may mean that the same blade moulding apparatus can be used to manufacture outboard portions 36 of different length blades 20. Further, in some examples manufacturing each blade 20 with the same outboard portion 36 may facilitate the use of high-volume manufacturing methods to manufacture the outboard portions 36 of the blades 20. In some preferred examples, the outboard portion 36 of each blade 20 may comprise at least 30% of the total blade length R. As such, a significant proportion of each blade 20 may be the same, facilitating cost effective manufacture of different length blades 20 in the family 32.

Referring still to the examples shown in Figure 2, the intermediate portion 38 of each blade 20 has a different spanwise length compared to the intermediate portions 38 of the other blades 20 in the family 32. As such, whilst each blade 20 in the family 32 has the same inboard portion 30, and each blade 20 in the family 32 has the same outboard portion 36, the difference in blade length R is achieved by varying the spanwise length of the intermediate portion 38 of each blade 20.

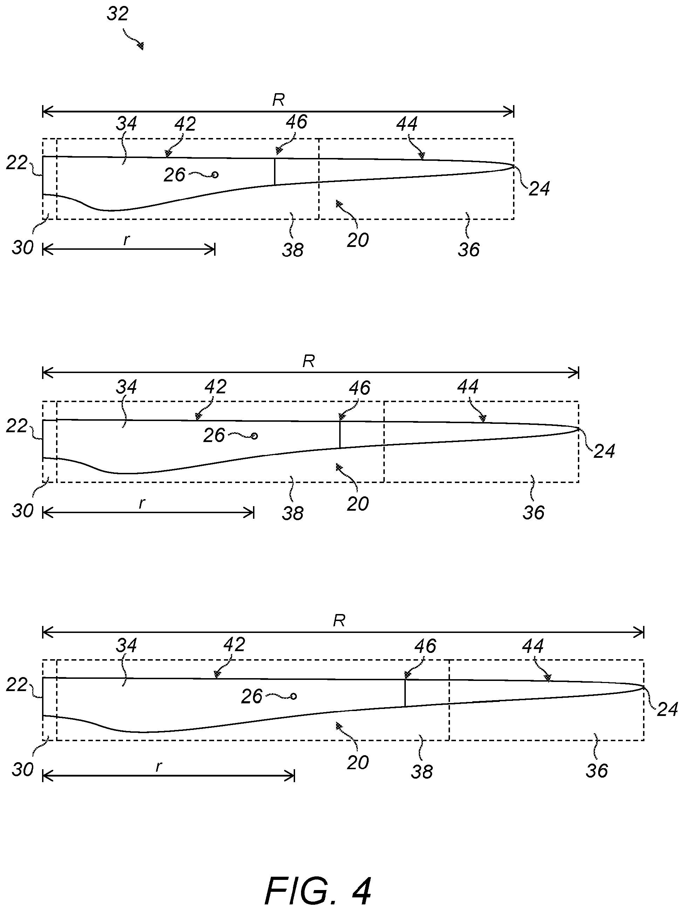

As will be described later in more detail with reference to the remaining figures, the variation in the length of the intermediate portion 38 can be achieved in a plurality of different ways. For example, the blades 20 in the family 32 may be modular blades, as described later with reference to the examples of Figures 4 to 8, or alternatively, the blades 20 may be formed as a whole-length blade in the manufacturing facility.

Whilst not shown in the accompanying figures, one possible method for manufacturing a family of whole-length blades 20 may involve the use of modular blade moulds. For example, a modular blade mould may include an inboard mould part for moulding the inboard portion 30 of the blade 20, and an outboard mould part for moulding the outboard portion 36 of the blade 20. The same inboard and outboard mould parts may be used to mould the inboard and outboard portions 30, 36 of each blade 20 in the family 32. The modular blade mould may further include one or more intermediate mould parts for moulding the intermediate portion 38 of a blade 20. Different intermediate mould parts may be used to mould blades 20 of different lengths R which each have intermediate portions 38 of different lengths. The chord and thickness of the intermediate section may decrease monotonously with the span of the blade; however, the intermediate section may have sections where the thickness and/or the chord are constant or even increase with the span. Particularly, the blade may have a local maximum in thickness and/or chord at the cable connection point 26.

While in one example, the inboard mould part and the outboard mould part may be the same for the whole family of blade, it was found to be advantageous that the inboard mould part and the outboard mould part advantageously may be arranged as a different twist for the individual members of the family of blades. Particularly, it was found that the longer the intermediate mould part and hence the longer the distance between the inboard and the outboard mould part, the higher the twist between the inboard and the outboard mould part as this allowed for a closer fit to the perfect aerodynamic profile of the blade. Such moulds allows for a family of wind turbine blades wherein each blade of the family of wind turbine blades has a first chord of the blade at the interface between the inboard portion and the intermediate portion and a second chord of the blade at the interface between the outboard portion and the intermediate portion, wherein for each blade the first chord is rotated with a different twist angle relative to the second chord, and the twist angle increases as blade length R increases.

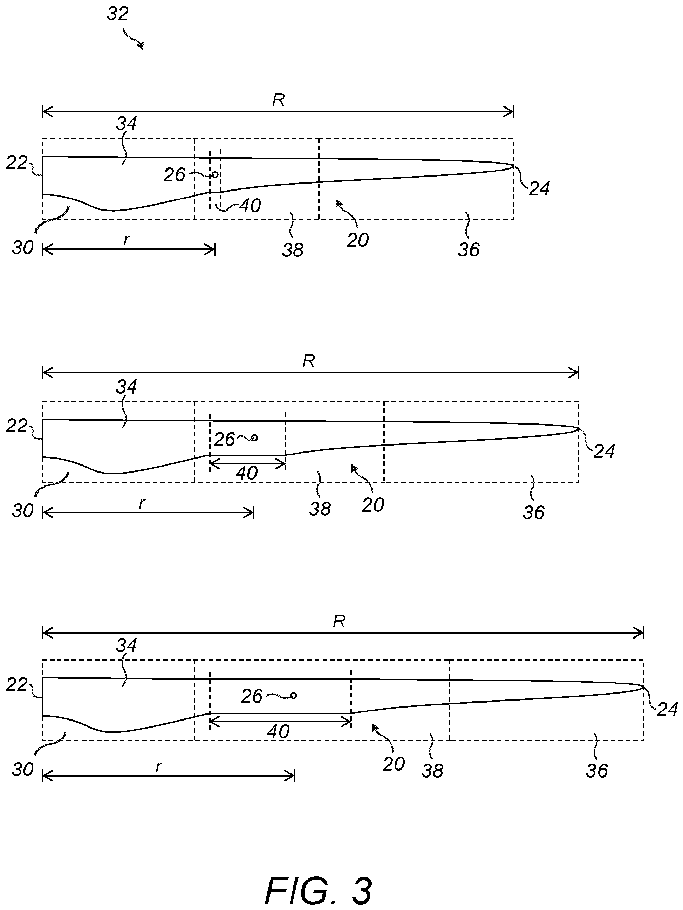

Figure 3 shows an example of a family 32 of wind turbine blades 20 for cable-stayed wind turbine rotors 16 wherein each blade 20 in the family 32 has a spanwise section 40 of the intermediate portion 38 throughout which the aerodynamic profile of the outer shell 34 is substantially constant. As shown in Figure 3, the cable connection point 26 of each blade 20 may be located in the spanwise section of constant aerodynamic profile 40. The variation in blade length R may be achieved by varying the length of the spanwise section 40. For example, the length of the spanwise section 40 may increase with increasing blade length R.

In some examples, blades 20 having a spanwise section of constant aerodynamic profile 40 may be manufactured using a modular blade mould as previously described. In such an example, the modular blade mould may comprise one or more intermediate mould parts that define a mould surface that has a substantially constant profile throughout a spanwise section of the mould. In some examples, such a modular blade mould may comprise one or more intermediate mould parts that each have a constant profile, and the number of such constant profile mould parts and/or the combined spanwise length of such constant profile mould parts may be varied to form blades 20 of different lengths R having different length spanwise sections of constant aerodynamic profile 40. The inboard section 30 of each blade 20 is the same as the inboard portions 30 of the other blades 20 in the family 32, for the family of blades in Fig. 3, the inboard portion 30 encompass the region of the blade 20 with the largest chord. When the intermediate portion 38 has a spanwise section with constant aerodynamic profile, then this section may be arranged immediately next to the inboard portion (not shown) or with a section of the intermediate portion not having a contact aerodynamic profile arranged between then inboard portion and the portion of the intermediate portion with the constant aerodynamic profile (as shown in Fig. 3).

Referring now to Figure 4, in some examples the family of wind turbine blades 32 may be a family of modular wind turbine blades 20. For example, the blades 20 may comprise an inboard blade module 42 and an outboard blade module 44. The inboard blade module 42 may be connected to the outboard blade module 44 at a joint 46. The inboard blade module 42 preferably defines the inboard portion 30 of the blade 20 and at least part of the intermediate portion 38 of the blade 20. In preferred examples such as that shown in Figure 4, the entire outboard portion 36 of each blade 20 is preferably defined by an outboard blade module 44.

In some examples, the outboard blade module 44 of each blade 20 may be the same as the outboard blade modules 44 of the other blades 20 in the family 32, as shown in Figure 4 for example. Such a configuration may facilitate cost-effective manufacture of the blades 20 in the family 32, because the outboard modules 44 can be manufactured in high volumes as standard parts that are common across all of the blades 20 in the family 32.

Referring still to Figure 4, the variation in blade length R for blades 20 in the family 32 may be achieved, at least in part, by providing different inboard blade modules 42 for different blades 20. For example, the inboard blade module 42 of each blade 20 may have a different spanwise length compared to the inboard blade modules 42 of the other blades 20 in the family 32. In the example shown in Figure 4, the inboard blade module 42 of each blade 20 comprises the cable connection point 26, however, it will be appreciated that in some other examples, the outboard blade module 44 of each blade 20 may comprise the cable connection point 26. Further, in some examples (not shown), the family 32 may comprise blades 20 having inboard blade modules 42 of different lengths as well as outboard blade modules 44 of different lengths.

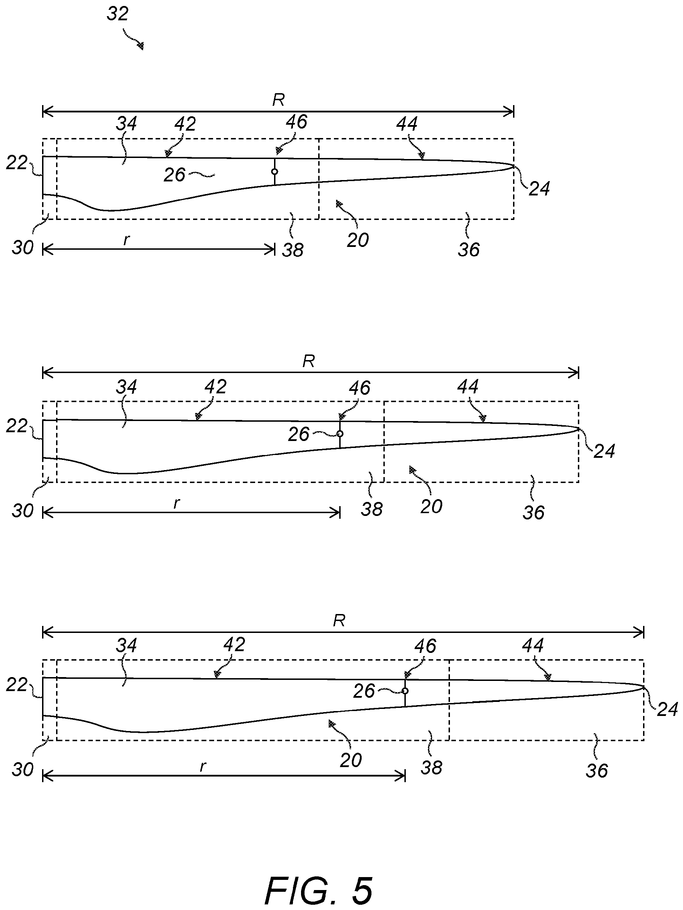

Referring briefly to Figure 5, in some examples the cable connection point 26 of each blade 20 in the family 32 may be located at the joint 46 connecting the inboard and outboard blade modules 42, 44. The modular blade 20 may be reinforced in the areas adjacent to the joint 46 to ensure that loads are transferred safely and effectively between the blade modules 42, 44 in use. The joint 46 may therefore present an advantageous location for transferring loads from the modular blade 20 to the blade connecting cable 28 via the connection point 26.

In the example shown in Figure 5, the family 32 comprises blades 20 that have the same outboard module 44 and different length inboard modules 42. However, it will be appreciated that in other examples where the blades 20 in the family 32 have both different inboard blade modules 42 and different outboard blade modules 44, the cable connection point 26 may similarly be located at the joint 46 between the blade modules 42, 44.

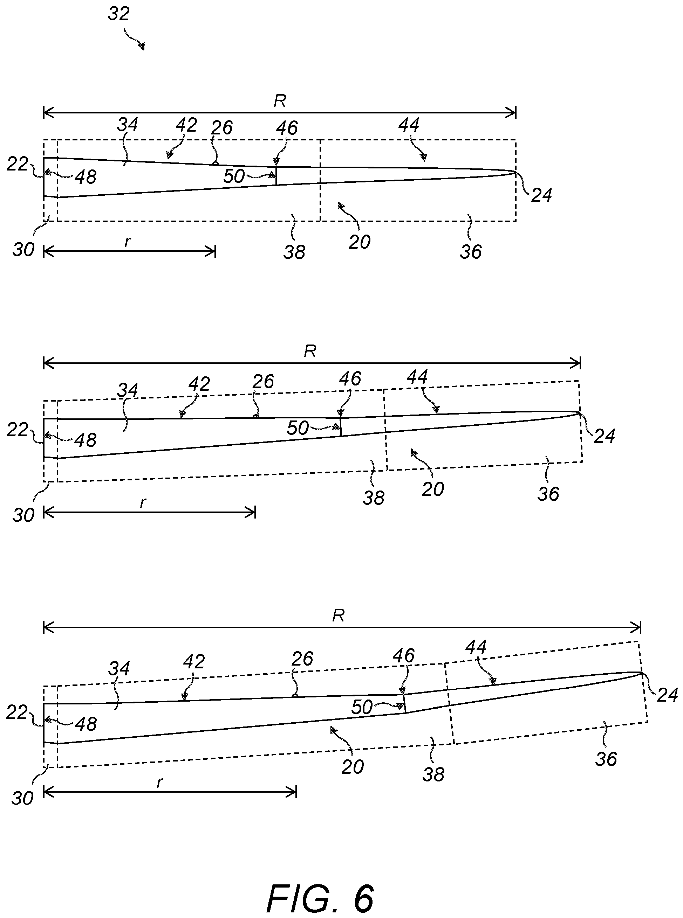

Figure 6 shows another example of a family 32 of different length wind turbine blades 20 for cable-stayed rotors 16. In this example, the different blades 20 in the family 32 have a different pre-bend. For example, as shown in Figure 6, in some examples the inboard blade module 42 of each blade 20 may have a different pre-bend compared to the inboard blade modules 42 of the other blades 20 in the family 32. As such, the different inboard blade modules 42 may comprise a different angular offset between inboard and outboard ends 48, 50 of the inboard module 42. This configuration may advantageously enable the assembly of site-specific blades 20 for different cable-stayed wind turbine rotors 16 that have different degrees of coning.

Whilst each blade 20 in the family of blades 32 shown by way of example in Figure 6 comprises the same outboard module 44, it will be appreciated that in other examples the blades 20 in the family 32 may comprise different outboard blade modules 44 in combination with inboard blade modules 42 that have different pre-bend.

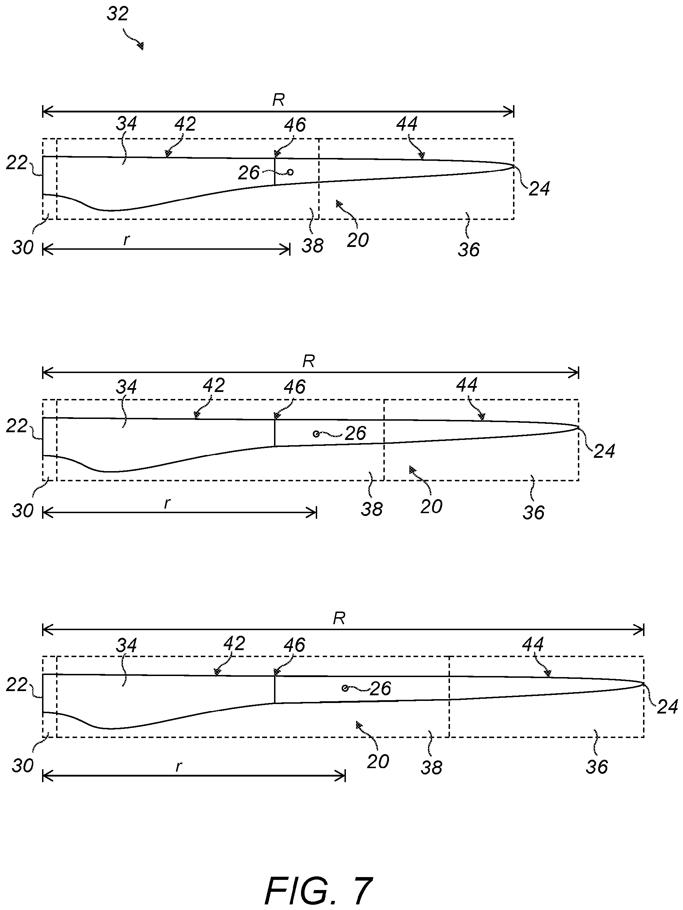

Figure 7 shows an example of a family 32 of modular wind turbine blades 20 in which the outboard blade module 44 of each blade 20 has a different spanwise length compared to the outboard blade modules 44 of the other blades 20 in the family of wind turbine blades 32. In some examples, as shown in Figure 7, the family 32 may comprise blades 20 that each have the same inboard blade module 42, and the variation in blade length R and the spanwise position r of the cable connection point 26 may therefore be achieved by providing different outboard blade modules 44.

It will be appreciated that whilst the spanwise length of each outboard blade module 44 may be different for the different blades 20 in such an example, the outboard portion 36 of each blade 20 in the family 32 is the same. This facilitates the re-use of blade moulds and/or blade mould parts for forming outboard blade modules 44 of different lengths. It follows that in such an example, the outboard blade module 44 may define at least part of the intermediate portion 38 of the blade 20 to provide the variation in blade length R. Accordingly, as shown in Figure 7, the outboard blade module 44 of each blade 20 may comprise the cable connection point 26, and varying the spanwise length of the outboard module 44 may also vary the spanwise position r of the cable connection point 26.

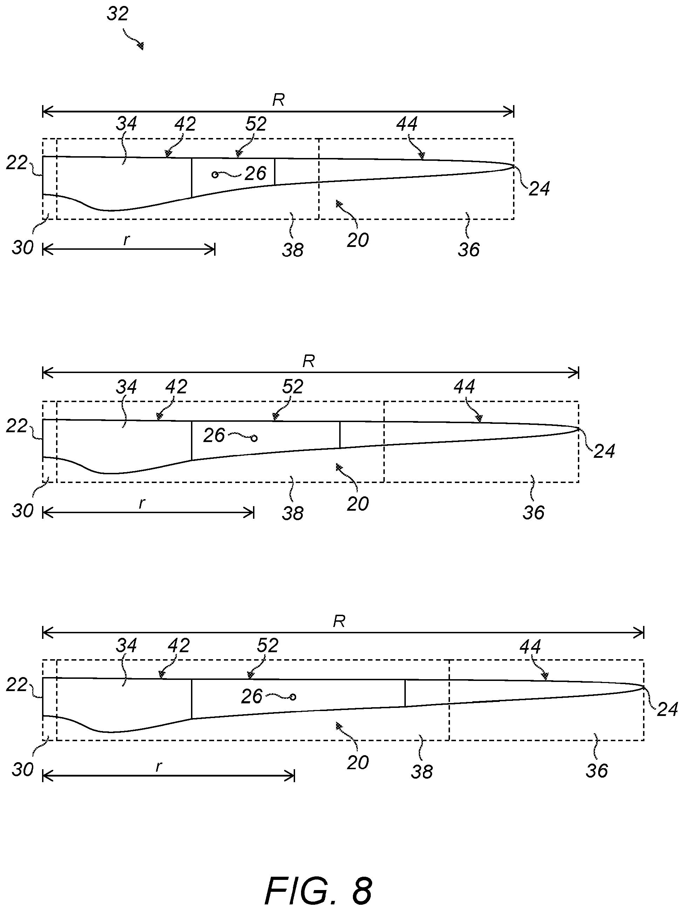

With reference now to Figure 8, in some examples the blade family 32 may comprise blades 20 having an intermediate blade module 52 connected between the inboard blade module 42 and the outboard blade module 44. In such an example, the intermediate blade module 52 of each blade 20 may comprise the cable connection point 26. Providing the cable connection point 26 on the intermediate blade module 52 facilitates a plurality of different blade configurations by means of which the blade length *R* and spanwise position *r* of the cable connection point 26 can be varied.

For example, as shown in Figure 8, each blade 20 in the family 32 may comprise an intermediate blade module 52 having a different spanwise length compared to the intermediate blade modules 52 of the other blades 20 in the family of wind turbine blades 32. As such, the variation in blade length *R* and spanwise position *r* of the cable connection point 26 may be achieved, at least in part, by providing different intermediate blade modules 52 for different blades 20. Further, whilst not shown in Figure 8, in some examples one or more of the blades 20 in the family 32 may comprise a plurality of intermediate blade modules 52.

In some examples, such as that shown in Figure 8, the inboard blade module 42 of each blade 20 may be the same as the inboard blade modules 42 of the other blades 20 in the family 32. Further, in some preferred examples, the outboard blade module 44 of each blade 20 may be the same as the outboard blade modules 44 of the other blades 20 in the family. Accordingly, in some examples both the inboard modules 42 and the outboard modules 44 may be the same across the different blades 20 in the family. In such an example, the variation in blade length R and the variation in spanwise position r of the cable connection point 26 may be achieved entirely through the variation of the intermediate blade modules 52. Such a configuration facilitates the use of standardised inboard and outboard blade modules 42, 44 across the different length blades 20 in the family 32. This in turn enables the use of high volume manufacturing methods to make the inboard and outboard blade modules 42, 44 and thereby reduces cost.

Whilst not shown in the accompanying figures, in some examples the blades 20 in the family 32 may each include the same intermediate module 52. In such examples, the blades 20 in the family 32 may each comprise different inboard modules 42 and/or different outboard modules 44 compared to the inboard/outboard modules 42/44 of the other blades 20 in the family 32. Further, in some other examples, the blades 20 in the family 32 may alternatively each comprise different intermediate modules 52 and/or different inboard modules 42 and/or different outboard modules 44 compared to the intermediate, inboard, and outboard modules 52, 42, 44 of the other blades 20 in the family 32. It will be appreciated that the description provided previously in relation to examples of the inboard and outboard blade modules 42, 44 is also applicable to examples in which the blades 20 additionally comprise one or more intermediate modules 52.

The description provided herein serves to demonstrate a plurality of possible examples of the present invention. The examples described above, and in the accompanying figures, serve to illustrate a non-exhaustive list of non-limiting examples. In particular it will be appreciated that features described in relation to any of the examples above may be readily combined with any other features described with reference to different examples without departing from the scope of the invention as defined in the appended claims.

For example, it will be appreciated that the location of the cable connection point 26 on a specific blade module 42, 44, 52 or at the joint 46 between blade modules, is not necessarily limited to, or linked to, the other features described in the respective examples above. For example, whilst not shown in the accompanying figures, in some examples the cable connection point 26 may be located at a joint between the outboard module 44 and an intermediate module 52, and hence both the outboard module 44 and the intermediate module 52 comprises the cable connection point 26.

Further, in some examples a family 32 of wind turbine blades 20 may comprise one or more modular wind turbine blades 20 (as shown in Figures 4 to 8 for example), and one or more whole-length wind turbine blades 20 (as shown in Figure 2 for example).

Whilst the accompanying Figures 2 to 8 each show three different blades 20 from a respective family of wind turbine blades 32, it will be appreciated that each family of wind turbine blades 32 may include any number of a plurality of different wind turbine blades 20. Further, it will be appreciated that in preferred examples, each cable-stayed rotor 16 that is fitted with blades 20 from a family of wind turbine blades 32 comprises a plurality of the same blades 20. For example, a first cable-stayed rotor 16 may comprise a plurality of the same blades 20 from a family of wind turbine blades 32, for example three of the same blades 20. A second cable-stayed rotor 16 may comprise a second plurality of the same wind turbine blades 20 from the same family 32 as the blades 20 of the first rotor 16, and the blades 20 of the second rotor 16 may be different compared to the blades 20 of the first rotor 16, for example different length R and/or different pre-bend.

## Claims

1. A family of wind turbine blades (32) for cable-stayed wind turbine rotors (16), the family (32) comprising a plurality of blades (20) of different lengths, each blade extending in a spanwise direction between a blade root (22) for connection to a hub (18) of a cable-stayed rotor (16), and a blade tip (24), and each blade having a blade length R defined by a spanwise distance between the blade root and the blade tip;
each blade further comprising:
an inboard portion (30) defining the blade root;
an outboard portion (36) defining the blade tip; and
an intermediate portion (38) between the inboard portion and the outboard portion, the intermediate portion comprising a cable connection point (26) located at a spanwise distance *r* from the blade root;
wherein the inboard portion of each blade is the same as the inboard portions of the other blades in the family, the outboard portion of each blade is the same as the outboard portions of the other blades in the family, and the intermediate portion of each blade has a different spanwise length compared to the intermediate portions of the other blades in the family; and
wherein the cable connection point of each blade in the family is located at a different spanwise distance r from the blade root than the connection point of each of the other blades in the family, and wherein the spanwise distance r increases as blade length R increases.

2. The family of wind turbine blades (32) of Claim 1, wherein the outboard portion (36) of each blade (20) comprises at least 30% of the length R of the blade, preferably 35% to 70% of the length R of the blade.

3. The family of wind turbine blades (32) of any preceding claim, wherein each blade (20) comprises an outer shell (34) defining an aerodynamic profile that varies along the length of the blade;
wherein each blade has a substantially constant aerodynamic profile throughout a spanwise section (40) of the intermediate portion; and
wherein the length of the spanwise section increases with increasing blade length R.

4. The family of wind turbine blades (32) of Claim 3, wherein the cable connection point (26) of each blade (20) is located in the spanwise section of constant aerodynamic profile (40).

5. The family of wind turbine blades (32) of any one of the preceding claims, wherein each blade of the family of wind turbine blades (32) has a first chord of the blade at the interface between the inboard portion and the intermediate portion and a second chord of the blade at the interface between the outboard portion and the intermediate portion,
wherein for each blade the first chord is rotated with a different twist angle relative to the second chord, and the twist angle increases as blade length R increases.

6. The family of wind turbine blades (32) of any preceding claim, wherein the blades (20) are modular wind turbine blades comprising an inboard blade module (42) and an outboard blade module (44), wherein the inboard blade module defines the inboard portion (30) of the blade and at least part of the intermediate portion (38) of the blade, and wherein the entire outboard portion (36) of each blade is defined by an outboard blade module (44).

7. The family of wind turbine blades (32) of Claim 6, wherein the outboard blade module (44) of each blade (20) is the same as the outboard blade modules of the other blades in the family of wind turbine blades.

8. The family of wind turbine blades (32) of Claim 6, wherein the outboard blade module (44) of each blade (20) has a different spanwise length compared to the outboard blade modules of the other blades in the family of wind turbine blades.

9. The family of wind turbine blades (32) of any of Claims 6 to 8, wherein the inboard blade module (42) of each blade (20) has a different spanwise length compared to the inboard blade modules of the other blades in the family of wind turbine blades.

10. The family of wind turbine blades (32) of any of Claims 6 to 9, wherein each blade (20) comprises a joint (46) connecting the outboard blade module (44) to another blade module (42, 52), and wherein the cable connection point (26) of each blade is located at the joint.

11. The family of wind turbine blades (32) of any of Claims 6 to 10, wherein the inboard blade module (42) of each blade (20) comprises the cable connection point (26).

12. The family of wind turbine blades (32) of any of Claims 6 to 11, wherein the outboard blade module (44) of each blade (20) comprises the cable connection point (26).

13. The family of wind turbine blades (32) of any of Claims 6 to 12, wherein each blade (20) further comprises an intermediate blade module (52) connected between the inboard blade module (42) and the outboard blade module (44), and wherein the intermediate blade module of each blade comprises the cable connection point (26), preferably each blade (20) comprises an intermediate blade module (52) having a different spanwise length compared to the intermediate blade modules of the other blades in the family of wind turbine blades.

14. The family of wind turbine blades (32) of Claim 12 or Claim 13, wherein the inboard blade module (42) of each blade (20) is the same as the inboard blade module of the other blades in the family of wind turbine blades.

15. The family of wind turbine blades (32) of any preceding claim, wherein the spanwise distance *r* is between 25% and 60%, preferably between 40% and 50%, of the total blade length *R*.

## Patentansprüche

1. Familie von Windkraftanlagenblättern (32) für Schrägseilrotoren (16) von Windkraftanlagen, wobei die Familie (32) eine Vielzahl von Blättern (20) unterschiedlicher Längen umfasst, wobei sich jedes Blatt in Spannweitenrichtung zwischen einer Blattwurzel (22) zur Verbindung mit einer Nabe (18) eines Schrägseilrotors (16) und einer Blattspitze (24) erstreckt und jedes Blatt eine Blattlänge *R* aufweist, die durch einen Spannweitenabstand zwischen der Blattwurzel und der Blattspitze definiert ist;
wobei jedes Blatt weiter umfasst:
einen inneren Abschnitt (30), der die Blattwurzel definiert;
einen äußeren Abschnitt (36), der die Blattspitze definiert; und
einen mittleren Abschnitt (38) zwischen dem inneren Abschnitt und dem äußeren Abschnitt, wobei der mittlere Abschnitt einen Kabelverbindungspunkt (26) umfasst, der sich in einem Spannweitenabstand *r* von der Blattwurzel befindet;
wobei der innere Abschnitt jedes Blattes derselbe ist wie die inneren Abschnitte der anderen Blätter der Familie, der äußere Abschnitt jedes Blattes derselbe ist wie die äußeren Abschnitte der anderen Blätter der Familie und der mittlere Abschnitt jedes Blattes eine andere Spannweitenlänge aufweist als die mittleren Abschnitte der anderen Blätter der Familie; und
wobei sich der Kabelverbindungspunkt jedes Blattes der Familie in einem anderen Spannweitenabstand *r* von der Blattwurzel befindet als der Verbindungspunkt jedes der anderen Blätter der Familie, und wobei der Spannweitenabstand *r* mit zunehmender Blattlänge *R* zunimmt.

2. Familie von Windkraftanlagenblättern (32) nach Anspruch 1, wobei der äußere Abschnitt (36) jedes Blattes (20) mindestens 30 % der Länge *R* des Blattes umfasst, vorzugsweise 35 % bis 70 % der Länge *R* des Blattes.

3. Familie von Windkraftanlagenblättern (32) nach einem vorstehenden Anspruch, wobei jedes Blatt (20) eine Außenschale (34) umfasst, die ein aerodynamisches Profil definiert, das sich entlang der Länge des Blattes ändert;
wobei jedes Blatt über einen Spannweitenquerschnitt (40) des mittleren Abschnitts ein im Wesentlichen konstantes aerodynamisches Profil aufweist; und
wobei die Länge des Spannweitenquerschnitts mit zunehmender Blattlänge R zunimmt.

4. Familie von Windkraftanlagenblättern (32) nach Anspruch 3, wobei sich der Kabelverbindungspunkt (26) jedes Blattes (20) im Spannweitenquerschnitt mit konstantem aerodynamischem Profil (40) befindet.

5. Familie von Windkraftanlagenblättern (32) nach einem der vorstehenden Ansprüche, wobei jedes Blatt der Familie von Windkraftanlagenblättern (32) eine erste Blattsehne an der Schnittstelle zwischen dem inneren Abschnitt und dem mittleren Abschnitt und eine zweite Blattsehne an der Schnittstelle zwischen dem äußeren Abschnitt und dem mittleren Abschnitt aufweist,
wobei für jedes Blatt die erste Sehne mit einem anderen Verdrehungswinkel relativ zur zweiten Sehne gedreht ist und der Verdrehungswinkel mit zunehmender Blattlänge R zunimmt.

6. Familie von Windkraftanlagenblättern (32) nach einem vorstehenden Anspruch, wobei die Blätter (20) modulare Windkraftanlagenblätter sind, die ein inneres Blattmodul (42) und ein äußeres Blattmodul (44) umfassen, wobei das innere Blattmodul den inneren Abschnitt (30) des Blattes und mindestens einen Teil des mittleren Abschnitts (38) des Blattes definiert und wobei der gesamte äußere Abschnitt (36) jedes Blattes durch ein äußeres Blattmodul (44) definiert ist.

7. Familie von Windkraftanlagenblättern (32) nach Anspruch 6, wobei das äußere Blattmodul (44) jedes Blattes (20) das gleiche ist wie die äußeren Blattmodule der anderen Blätter in der Familie von Windkraftanlagenblättern.

8. Familie von Windkraftanlagenblättern (32) nach Anspruch 6, wobei das äußere Blattmodul (44) jedes Blattes (20) eine andere Spannweitenlänge aufweist als die äußeren Blattmodule der anderen Blätter in der Familie von Windkraftanlagenblättern.

9. Familie von Windkraftanlagenblättern (32) nach einem der Ansprüche 6 bis 8, wobei das innere Blattmodul (42) jedes Blattes (20) eine andere Spannweitenlänge aufweist als die inneren Blattmodule der anderen Blätter in der Familie von Windkraftanlagenblättern.

10. Familie von Windkraftanlagenblättern (32) nach einem der Ansprüche 6 bis 9, wobei jedes Blatt (20) ein Gelenk (46) umfasst, das das äußere Blattmodul (44) mit einem anderen Blattmodul (42, 52) verbindet, und wobei sich der Kabelverbindungspunkt (26) jedes Blattes an dem Gelenk befindet.

11. Familie von Windkraftanlagenblättern (32) nach einem der Ansprüche 6 bis 10, wobei das innere Blattmodul (42) jedes Blattes (20) den Kabelverbindungspunkt (26) umfasst.

12. Familie von Windkraftanlagenblättern (32) nach einem der Ansprüche 6 bis 11, wobei das äußere Blattmodul (44) jedes Blattes (20) den Kabelverbindungspunkt (26) umfasst.

13. Familie von Windkraftanlagenblättern (32) nach einem der Ansprüche 6 bis 12, wobei jedes Blatt (20) weiter ein mittleres Blattmodul (52) umfasst, das zwischen dem inneren Blattmodul (42) und dem äußeren Blattmodul (44) verbunden ist, und wobei das mittlere Blattmodul jedes Blattes den Kabelverbindungspunkt (26) umfasst, vorzugsweise jedes Blatt (20) ein mittleres Blattmodul (52) mit einer anderen Spannweitenlänge als die mittleren Blattmodule der anderen Blätter in der Familie von Windkraftanlagenblättern umfasst.

14. Familie von Windkraftanlagenblättern (32) nach Anspruch 12 oder Anspruch 13, wobei das innere Blattmodul (42) jedes Blattes (20) das gleiche ist wie das innere Blattmodul der anderen Blätter in der Familie von Windkraftanlagenblättern.

15. Familie von Windkraftanlagenblättern (32) nach einem vorstehenden Anspruch, wobei der Spannweitenabstand *r* zwischen 25 % und 60%, vorzugsweise zwischen 40 % und 50%, der gesamten Blattlänge *R* ist.

## Revendications

1. Famille de pales d'éolienne (32) pour rotors d'éolienne à haubans (16), la famille (32) comprenant une pluralité de pales (20) de longueurs différentes, chaque pale s'étendant dans le sens de l'envergure entre un pied de pale (22) destiné à être relié à un moyeu (18) d'un rotor à haubans (16) et un bout de pale (24), et chaque pale présentant une longueur de pale *R* définie par une distance dans le sens de l'envergure entre le pied de pale et le bout de pale ;
chaque pale comprenant en outre :
une portion intérieure (30) définissant le pied de pale ;
une portion extérieure (36) définissant le bout de pale ; et
une portion intermédiaire (38) entre la portion intérieure et la portion extérieure, la portion intermédiaire comprenant un point de liaison de câble (26) situé à une distance dans le sens de l'envergure *r* à partir du pied de pale ;
dans laquelle la portion intérieure de chaque pale est la même que les portions intérieures des autres pales de la famille, la portion extérieure de chaque pale est la même que les portions extérieures des autres pales de la famille, et la portion intermédiaire de chaque pale présente une longueur dans le sens de l'envergure différente comparée aux portions intermédiaires des autres pales de la famille ; et
dans laquelle le point de liaison de câble de chaque pale de la famille est situé à une distance dans le sens de l'envergure r différente à partir du pied de pale par rapport au point de liaison de chacune des autres pales de la famille, et dans laquelle la distance dans le sens de l'envergure *r* augmente à mesure que la longueur de pale *R* augmente.

2. Famille de pales d'éolienne (32) selon la revendication 1, dans laquelle la portion extérieure (36) de chaque pale (20) comprend au moins 30 % de la longueur *R* de la pale, de préférence 35 % à 70 % de la longueur *R* de la pale.

3. Famille de pales d'éolienne (32) selon une quelconque revendication précédente, dans laquelle chaque pale (20) comprend une paroi externe (34) définissant un profil aérodynamique qui varie le long de la longueur de la pale ;
dans laquelle chaque pale présente un profil aérodynamique sensiblement constant sur toute une section dans le sens de l'envergure (40) de la portion intermédiaire ; et
dans laquelle la longueur de la section dans le sens de l'envergure augmente avec l'augmentation de la longueur de pale *R*.

4. Famille de pales d'éolienne (32) selon la revendication 3, dans laquelle le point de liaison de câble (26) de chaque pale (20) est situé dans la section dans le sens de l'envergure de profil aérodynamique constant (40).

5. Famille de pales d'éolienne (32) selon l'une quelconque des revendications précédentes, dans laquelle chaque pale de la famille de pales d'éolienne (32) présente une première corde de la pale à l'interface entre la portion intérieure et la portion intermédiaire et une seconde corde de la pale à l'interface entre la portion extérieure et la portion intermédiaire,
dans laquelle pour chaque pale, la première corde est tournée avec un angle de torsion différent relativement à la seconde corde, et l'angle de torsion augmente à mesure que la longueur de pale R augmente.

6. Famille de pales d'éolienne (32) selon une quelconque revendication précédente, dans laquelle les pales (20) sont des pales d'éolienne modulaires comprenant un module de pale intérieur (42) et un module de pale extérieur (44), dans laquelle le module de pale intérieur définit la portion intérieure (30) de la pale et au moins une partie de la portion intermédiaire (38) de la pale, et dans laquelle la totalité de la portion extérieure (36) de chaque pale est définie par un module de pale extérieur (44).

7. Famille de pales d'éolienne (32) selon la revendication 6, dans laquelle le module de pale extérieur (44) de chaque pale (20) est le même que les modules de pale extérieurs des autres pales de la famille de pales d'éolienne.

8. Famille de pales d'éolienne (32) selon la revendication 6, dans laquelle le module de pale extérieur (44) de chaque pale (20) présente une longueur dans le sens de l'envergure différente comparée aux modules de pale extérieurs des autres pales de la famille de pales d'éolienne.

9. Famille de pales d'éolienne (32) selon l'une quelconque des revendications 6 à 8, dans laquelle le module de pale intérieur (42) de chaque pale (20) présente une longueur dans le sens de l'envergure différente comparée aux modules de pale intérieurs des autres pales de la famille de pales d'éolienne.

10. Famille de pales d'éolienne (32) selon l'une quelconque des revendications 6 à 9, dans laquelle chaque pale (20) comprend un joint (46) reliant le module de pale extérieur (44) à un autre module de pale (42, 52), et dans laquelle le point de liaison de câble (26) de chaque pale est situé au niveau du joint.

11. Famille de pales d'éolienne (32) selon l'une quelconque des revendications 6 à 10, dans laquelle le module de pale intérieur (42) de chaque pale (20) comprend le point de liaison de câble (26).

12. Famille de pales d'éolienne (32) selon l'une quelconque des revendications 6 à 11, dans laquelle le module de pale extérieur (44) de chaque pale (20) comprend le point de liaison de câble (26).

13. Famille de pales d'éolienne (32) selon l'une quelconque des revendications 6 à 12, dans laquelle chaque pale (20) comprend en outre un module de pale intermédiaire (52) relié entre le module de pale intérieur (42) et le module de pale extérieur (44), et dans laquelle le module de pale intermédiaire de chaque pale comprend le point de liaison de câble (26), de préférence chaque pale (20) comprend un module de pale intermédiaire (52) présentant une longueur dans le sens de l'envergure différente comparée aux modules de pale intermédiaires des autres pales de la famille de pales d'éolienne.

14. Famille de pales d'éolienne (32) selon la revendication 12 ou la revendication 13, dans laquelle le module de pale intérieur (42) de chaque pale (20) est le même que le module de pale intérieur des autres pales de la famille de pales d'éolienne.

15. Famille de pales d'éolienne (32) selon une quelconque revendication précédente, dans laquelle la distance dans le sens de l'envergure *r* est comprise entre 25 % et 60 %, de préférence entre 40 % et 50 %, de la longueur de pale totale *R*.
